# FASCICULE DE BREVET EUROPEEN

(11) **EP 2 661 567 B1**
(45) Date de publication et mention de la délivrance du brevet: **22.07.2020**
(21) Numéro de dépôt: 11799737.9
(22) Date de dépôt: 16.11.2011
(51) Int. Cl.: F16G 3/10

(54) **PROCÉDÉ D'ASSEMBLAGE DE BANDE TRANSPORTEUSE, UTILISATION ET BANDE TRANSPORTEUSE**
VERFAHREN ZUR MONTAGE EINES FÖRDERBANDES, SEINE VERWENDUNG UND FÖRDERBAND
METHOD FOR ASSEMBLING A CONVEYOR BELT, USE THEREOF, AND CONVEYOR BELT

(30) Priorité: 16.11.2010 FR 1004442; 18.01.2011 FR 1100140
(43) Date de publication de la demande: 13.11.2013
(73) Titulaire: Cobra Europe, 70300 Luxeuil les bains (FR)
(72) Inventeur: MATHIEU, Hervé, F-90800 Bavilliers (FR); ROESSNER, Daniel, F-68200 Mulhouse (FR); DREAN, Jean-Yves, F-68350 Brunstatt (FR); OSSELIN, Jean-François, F-68120 Ballersdorf (FR)
(74) Mandataire: Munier, Laurent
(86) Numéro de dépôt international: PCT/FR2011/000608
(87) Numéro de publication internationale: WO 2012/066199

(56) Documents cités:
- DE-A1- 3 933 710
- DE-A1- 4 118 946
- DE-U1- 29 918 374
- GB-A- 2 090 788
- JP-A- 2002 372 106

## Description

La présente invention concerne un assemblage par jonction de bande transporteuse.

En premier lieu, l'invention se rapporte à l'assemblage par jonction de bandes transporteuses transporteuse par couture suivant des trajectoires particulières formant un champ de couture.

Dans divers secteurs de l'industrie dont les mines, les carrières et l'agroalimentaire, le transport de marchandise s'effectue via des bandes transporteuses. Les bandes transporteuses sont des tapis roulants à échelle industrielle. Elles sont formées d'une ou plusieurs nappes textiles qui ont pour fonction de transmettre l'effort, et d'un revêtement en caoutchouc qui a pour fonction de protéger les nappes textiles de l'usure et des chocs. Pour des raisons de manutention et d'acheminement sur site, les tronçons de bandes sont fabriquées en rouleaux pesant jusqu'à 10 tonnes. Ces rouleaux ont une longueur de 200m en moyenne. Les tronçons de bandes sont alors assemblés sur le site de montage du transporteur pour former une bande jusqu'à plusieurs dizaines de kilomètres. Il en résulte un grand nombre de jonctions.

Certaines jonctions de l'état de la technique sont effectuées par vulcanisation (jonction à chaud), avec des pièces rapportées (jonction mécanique) ou bien par collage (jonction à froid). Ces jonctions nécessitent du temps pour être effectuées. Dans le cas de rupture de la jonction lors du fonctionnement de cette dernière, des pertes considérables sont engendrées par l'arrêt du convoyage. L'assemblage est un réel problème, d'autant plus qu'il fragilise la bande. En effet, une résistance de 75% par rapport à la résistance nominale à la traction de la bande est obtenue dans le meilleur des cas avec une résistance de 50% de la résistance nominale à la traction de la bande dans bien des cas, la jonction est le point faible de la bande transporteuse.

Par le document DE 39 33 710 A1), on connaît une jonction de bout de bande transporteuse par collage. Le collage demande pour obtenir une bonne adhérence une surface très grande. Pour cela, le bout de bande est découpé en formes de dents le plus longues possible avec les angles les plus aigus possible ce qui augmente la surface. Ce type de jonction présente d'autres inconvénients liés à la colle qui est un produit chimique et la presse qui est fonction du matériau. De plus, l'environnement ne doit pas venir perturber la colle ou la presse. Par conséquent, l'opérateur doit être particulièrement attentif et ce procédé peut entrainer des ratés lors de la jonction de bandes.

L'état de la technique connaît encore des jonctions mécaniques l'agrafage.

L'agrafage consiste à perforer les bouts de bandes, puis assembler lesdites bandes par des éléments métalliques très costauds les agrafes qui relient les trous des deux bandes. Au contraire du collage, ce procédé autorise de petites surfaces pour la jonction. Mais les trous de passage des agrafes affaiblissent la bande (le document DE.41 18 946 A1 présente des perçages de bandes adaptés à l'agrafage où sont utilisés utilise des fils à la place des agrafes pour une jonction par liage).

Cet assemblage par liage est connu par le document DE 41 18 946 A1 dit D1.

Par le document DE 41 18 946 A1, une jonction de deux extrémités des bandes transporteuses est connue afin de permettre un transfert de couche support de charge à chaque bande et assurer une jonction de géométrie plus courte. Les charges standard sont transférées aux doigts de chaque extrémité de bandes alors que les charges élevées sont supportées par des liens en tissu. Les liens passent par des trous disposés en rangées dans la couche support de chaque bande. Ainsi, les trous sont des perçages effectués dans la bande avant le niveau des doigts puisqu'il s'agit de deux rangées de perçages. Ensuite, des liens sont introduits dans ces perçages. Le but de cette technique est de s'adapter aux bandes transporteuses en caoutchouc, PVC, etc. et d'améliorer la résistance de jonctions plus réduites.

Ce document D1 décrit une jonction de bande avec des perçages dans les bandes pour un assemblage par liage. Même si cette jonction double une jonction avec des doigts**,** les perçages ne sont pas dans les dents. Les perçages sont placés conformément à une structure de jonction par agrafage.

Les agrafes sont remplacées par des fils. Cette technique connue est une jonction par liage. Les liages permettent de gagner quelques pourcents par rapport aux agrafes. Mais cette technique demande un dosage très délicat en fonction des diamètres de perçage et des diamètres de liage. Ceci impose des opérations manuelles. Par contraste à l'invention qui ne prévoie pas des tissus liés, mais cousus et permet l'utilisation d'une machine à coudre.

Par conséquent la technique décrite dans le document DE 41 18 946 A1 ne relève pas du même domaine que celle de l'invention.

Cette technique connue présente des inconvénients, le liage est superficiel, le tissus de renfort n'est pas lié d'un coté à l'autre, les efforts passent par les dents. Le liage est limité à l'extrémité et vise à joindre les dents bord à bord. Ceci est très loin du revêtement de l'invention. Une telle technique par liage ne permet pas la répartition des efforts sur la surface nécessaire pour obtenir le résultat de l'invention. Ce qui explique que ce document comme le document JP 2002 372106 A ne conduit pas à rechercher les formes et dimensions de dents nécessaires à l'invention.

Ainsi, ce procédé décrit par le document DE 41 18 946 A1 présente des difficultés spécifiques (dosage) et ne permet pas d'atteindre les formes de produits qui résolvent le problème technique objet de l'invention.

Notamment ce document précise que son collage à dents courtes ne supporte que de faibles charges et que si les charges sont plus fortes une jonction par liens est prévues ; les limites de cette technique sont que :
- un adhésif est utilisé pour fixer les dents entre elles (première jonction), par conséquent les dents n'ont aucun lien direct avec le liage réalisé (deuxième jonction).
- le liage est longitudinal et prétend remplacer en partie les fils coupés pour la jonction, or on réalise des perçages dans la carcasse sur des sections plus importantes que les fils ajoutés. Donc, cette technique connu n'apporte pas de renfort supplémentaire.
- le procédé de liens passant dans des trous du document DE 41 18 986 A1 est plus apparenté à de l'agrafage, on procède par perforation de chaque côté de la bande pour relier les deux extrémités des bandes par un lien.

Ce document décrit une combinaison par juxtaposition de deux techniques : la jonction des doigts par collage et, pour des charges plus importantes, la jonction par liens de deux bandes. Un des buts de l'invention est d'éviter d'affaiblir la bande par des trous. Or, les liens passent dans des trous (perçages) effectués à l'avance dans les bandes. Ces liens n'ont aucun rapport avec la jonction par doigts (éventuellement dents). Il s'agit d'une autre jonction. Pour la première jonction (collage de dents) il a été vu plus haut qu'un des problèmes de l'assemblage par collage de dents est la longueur nécessaire de ces dents. Ce document illustre ce problème. La longueur des dents est raccourcie. Il a fallu aménager une deuxième jonction par lien pour supporter les charges plus fortes. Ici, les perforations sont reliées par des fils alors que dans l'agrafage, ce sont des agrafes en acier. Une condition nécessaire pour réaliser un agrafage correct est le serrage de la carcasse qui permet d'obtenir la cohésion des fils de chaîne et des fils de trame du tissu. Or, dans ce procédé, nous n'avons en aucun cas cet effet de serrage. La pérennité de la jonction repose donc essentiellement sur les dents qui ont par ailleurs été raccourcies :
- inefficacité pour le passage des petits tambours : les fils de liage sont en contrainte négative, le liage ne participe donc pas à la résistance de l'ensemble au moment le plus critique pour la jonction.
- les doigts (dents) « non liés » et les fils de liage en contrainte négative engendrent une durée de vie limitée de la jonction.
- les efforts dans ce cas sont concentrés au niveau des trous de perçage.

De plus, rien ne conduit l'homme du métier à combiner les trois techniques des deux documents cités.

Ainsi, un objet de l'invention est d'éviter de faire des perçages. Ce résultat est atteint par la couture. Il n'est plus nécessaire de faire un perçage, puis de passer dans ce perçage un lien.

Enfin, les essais de la demanderesse ont montré que la jonction par couture présente de meilleurs résultats. C'est une jonction mécanique par fils sur une zone de grande longueur (voir document JP 2002 372106 A).

La couture par une zone de grande longueur permet d'obtenir une bonne résistance de la bande. Donc surmonte les inconvénients de l'agrafage ou du liage sans avoir les inconvénients du collage.

La présente invention se situe dans le domaine des jonctions par couture.

Mais les jonctions connues ne permettent pas de s'adapter aux différents types de bandes.

La présente invention vise à résoudre ce problème technique avec une solution qui endommage le moins possible la carcasse.

Pour cela la demanderesse a trouvé avec des essais qu'il faut une répartition des efforts sur la surface.

Par exemple, les essais ont montré qu'une surépaisseur ne permet pas d'atteindre la solution de ce problème technique. Par contre, les essais cités dans la description indiquent la structure trouvée par la demanderesse pour résoudre le problème technique.

Il existe donc un besoin d'améliorer ces jonctions, en améliorant leur résistance et la tenue des jonctions.

L'invention a pour but de répondre à ces besoins, et de résoudre au moins une partie des problèmes posés par l'état de la technique en particulier d'obtenir une jonction de bande universelle adaptée à tous types de carcasses de bandes transporteuses.

Pour résoudre le problème technique de l'invention la demanderesse relie la carcasse mâle à la carcasse femelle dans toute l'épaisseur avec une répartition des efforts par les étapes suivantes :
- préparation des bouts de bandes pour leur donner une forme appropriée à une jonction, à savoir une forme en dents ;
- pose du revêtement de chacun des bouts sur une longueur prédéterminée ;
- couture selon un champ de couture prédéterminé pour assembler les carcasses (4) des deux bouts de bande ;
- pose d'un revêtement (5) pour recouvrir la couture.

Aucun des documents cités ci-dessus n'y arrive.

La jonction de bande par coutures avec des bouts de bandes en forme de dents décrite par le document JP 2002 372106 A

Bien que ce soit le document le plus proche de l'invention connue de la demanderesse, par contraste avec l'invention son objet est différent.

Ce document vise la jonction d'une bande aramide. C'est une bande très fine à une couche de tissus sans matrice.

Ce document n'enseigne pas comment couvrir tous types de carcasses de bandes. Bien au contraire, c'est une couture bord à bord. Donc qui tire et provoque un déboîtement avec les carcasses.

L'invention répartie les efforts par une couture surfacique et un revêtement sur les dents.

Par contraste avec la présente invention, les dents du document JP 2002 372106 A ont une fonction différente. Elles servent à éviter l'effet charnière et non à répartir les efforts. Elles ne sont pas combinées à un revêtement.

Ainsi, au contraire de l'invention, ce document connu ne vise pas une jonction universelle ; mais est limité à un seul type particulier de bande.

Il ne cherche pas une répartition des efforts par une couverture de la jonction bande mais une jointure d'extrémité.

La jonction de bande avec des perçages dans les bandes pour un assemblage par liage décrit par le document DE 41 18 946 A1.

Même si cette jonction présente des dents, les perçages ne sont pas dans les dents. Les perçages sont placés conformément à une structure de jonction par agrafage.

Les agrafes sont remplacées par des fils. Cette technique connue est une jonction par liage. Les liages permettent de gagner quelques pourcents par rapport aux agrafes. Mais cette technique demande un dosage très délicat en fonction des diamètres de perçage et des diamètres de liage. Ceci impose des opérations manuelles. Par contraste à l'invention qui ne prévoie pas des tissus liés, mais cousus et permet l'utilisation d'une machine à coudre.

Par conséquent la technique décrite dans le document DE 41 18 946 A1 ne relève pas du même domaine que celle de l'invention.

Dans cette technique connue par contraste à l'invention le liage est superficiel, le tissus de renfort n'est pas lié d'un coté à l'autre, les efforts passent par les dents. Le liage est limité à l'extrémité et vise à joindre les dents bord à bord. Ceci est très loin du revêtement de l'invention. Une telle technique par liage ne permet pas la répartition des efforts sur la surface nécessaire pour obtenir le résultat de l'invention. Ce qui explique que ce document comme le document JP 2002 372106 A ne conduit pas à rechercher les formes et dimensions de dents nécessaires à l'invention.

Par conséquenti, ce procédé décrit par le document DE 41 18 946 A1 présente des difficultés spécifiques (dosage) et ne permet pas d'atteindre les formes de produits qui résolve le problème technique visé par l'invention.

De plus, rien ne conduit l'homme du métier à combiner les techniques des deux documents cités.

Au surplus, dans les techniques connues par les deux documents cités plus haut les dents des n'ont pas la géométrie de l'invention, pas les fils ne sont pas les fils de haute ténacité de l'invention, ceci sans la façon de couvrir les angles de la jonction de l'invention.

Ainsi, l'invention répond au besoin d'améliorer ces jonctions, en améliorant leur résistance et leur tenue.

L'invention a pour but de répondre à ces besoins, et de résoudre au moins une partie des problèmes posés par l'état de la technique ; en particulier d'obtenir une jonction de bande universelle adaptée à tous types de carcasses de bandes transporteuses.

Dans ce but il est proposé un procédé d'assemblage de deux bouts de bande transporteuse par couture suivant des trajectoires particulières formant un champ de couture. Les deux bouts de bande transporteuse comportent au moins une carcasse, et un revêtement, par couture.

Le procédé d'assemblage selon la revendication 1 comprend les étapes suivantes :
- La première étape consiste à couper à angle droit les deux bouts à joindre;
- La deuxième étape consistant à enlever le revêtement; la longueur de revêtement découverte devant être plus longue que la longueur des dents;
- La troisième étape consistant à découper des dents suivant le profil choisi présentant des diminutions de section lentes au niveau des dents pour assurer un transfert progressif de l'effort de traction d'un bout de bande à l'autre;
- La quatrième étape consistant à coudre les dents assemblées suivant des trajectoires définies; l'objectif étant d'obtenir le champ de couture rempli d'une manière homogène afin de répartir les contraintes de traction;
- La cinquième étape étant de recouvrir la couture avec un morceau de revêtement.

Ce procédé est particulier en ce que la couture est réalisée selon un champ de couture prédéterminé en fonction du type de bande transporteuse.

Les bandes transporteuses sont formées d'un pli ou de plusieurs plis. Le pli (ou l'assemblage de plis) est dénommé la carcasse.

Les bandes formées d'un seul pli, appelées monoplies, sont assemblées en découpant les deux extrémités en forme de dents complémentaires. La couture sert à solidariser l'ensemble de la matière ainsi obtenue.

Les bandes formées de plusieurs plis appelées multiplis sont assemblées avec une solution alternative. Elle consiste sur les deux extrémités de bande à assembler à couper les plis individuellement, en une position décalée à chaque pli, pour obtenir une sorte d'escalier, complémentaire sur l'une des extrémités par rapport à l'autre, ce qui donne également une interpénétration des carcasses.

La couture va solidariser mécaniquement l'ensemble de la jonction obtenue.

Ce procédé est particulier en ce que l'assemblage mécanique est obtenu d'une manière uniforme grâce au champ de couture. En effet, la couture sous forme de suture verticale ou en zig zag ne permet pas d'avoir un assemblage satisfaisant. La grande densité de fils de couture et de perforations dans la matière aura pour conséquence une faible efficacité de l'assemblage.

La solution du champ de couture selon l'invention permet une transmission des efforts d'un bout à l'autre d'une manière homogène.

Les dents et les étages sont utilisés pour obtenir un bon comportement dynamique, sachant que l'assemblage avec des bouts droits ou en diagonales peut être effectué au travers d'un renfort tissé ou non, cousu aux deux bouts ; mais le comportement dynamique de cette jonction est moins efficace.

En variante, la bande transporteuse est composée par au moins la carcasse, d'un entreplis et le revêtement.

Selon d'autres caractéristiques du procédé :
- une étape supplémentaire de pose par coutures de renfort en tissé ou en non tissé est prévu entre les étapes de dépose des revêtements et de couture pour assemblage des carcasses.
- lesdites dents présentent une longueur allant de 10mm à 5000mm en fonction de l'épaisseur et de la largeur de la bande transporteuse à jonctionner, de préférence de l'ordre de 200mm. La tenue s'améliore si la longueur est augmentée.
- lesdits étages présentent une longueur définie en fonction du type de bande, du nombre de plis, de la largeur et l'épaisseur de la bande, allant de 1mm à 5000mm, de préférence de l'ordre de 50mm, la tenue s'améliorant si la longueur est augmentée.
- ladite couture présente une densité de couture de 1 fil/cm à 100 fils/cm, en fonction de l'épaisseur, de la largeur et du type de la bande transporteuse à jonctionner de préférence de l'ordre de 15 à 20 fils/cm.
- la matière du fil est un polymère typiquement à cristaux liquides. En effet ce matériau présente un bon compromis entre la résistance spécifique, la déformation à rupture, la tenue à la chaleur et la résistance au nœud. Le coefficient de frottement du fil est important.
- l'angle complémentaire de l'angle des fils de la couture par rapport à l'axe longitudinal de la bande est compris entre 0 à 90°, de préférence de l'ordre de 45°. L'angle complémentaire est le complément à 90°. Ainsi quand ledit angle complémentaire est de 30°, l'angle de la couture par rapport à l'axe longitudinal de la bande est de 60°.
- deux sens de couture différents sont appliqués sur le champ de couture de sorte à croiser les fils correspondants, de préférence d'une manière sensiblement symétrique par rapport à l'axe longitudinal de la bande. Un tel croisement de fils améliore la tenue de la couture.
- la longueur du point de couture présente une longueur allant de 1 à 200mm, de préférence de 3 à 20mm.
- l'angle des dents par rapport à l'axe longitudinal de la bande est compris entre 0° et 90°, de préférence défini en fonction de la largeur et de l'épaisseur de la bande transporteuse à jonctionner, de préférence de l'ordre de 7°. L'objectif est d'obtenir un plus grand nombre de dents que des angles plus grands, tout en gardant une solidité suffisante.
- l'assemblage mécanique des deux bouts est obtenu grâce au champ de couture pour éviter une couture « zig zag » ou suture.

La présente invention concerne également l'utilisation d'un procédé de couture conforme à ceux décrit ci-dessus pour obtenir un assemblage de deux bouts de bande transporteuse constituée d'une carcasse et d'un revêtement.

L'invention se rapporte encore à une bande transporteuse comprenant une carcasse et d'un revêtement. La bande transporteuse est formée de bouts comprenant au moins une carcasse et un revêtement, lesdits bouts étant assemblés par un champ couture de densité définie, en découpe symétrique ou dissymétrique, c'est-à-dire à dents décalées.

D'autres avantages de l'invention apparaîtront à la lecture de la description d'un exemple de réalisation non limitatif et des dessins annexés, dans lesquels :
La figure 1 représente en vue de dessus deux bouts de bande cousus,
La figure 2 représente en vue de côté les deux bouts de bande de la figure 1,
La figure 3 représente un mode de découpe de deux bouts de bande,
La figure 4 représente un mode de découpe de deux bouts de bande,
La figure 5 représente un mode de découpe symétrique de deux bouts de bande,
La figure 6 représente un mode de découpe dissymétrique, de deux bouts de bande,
la figure 7 à 17 représente les éléments de la bande au cours des étapes de procédé selon l'invention.

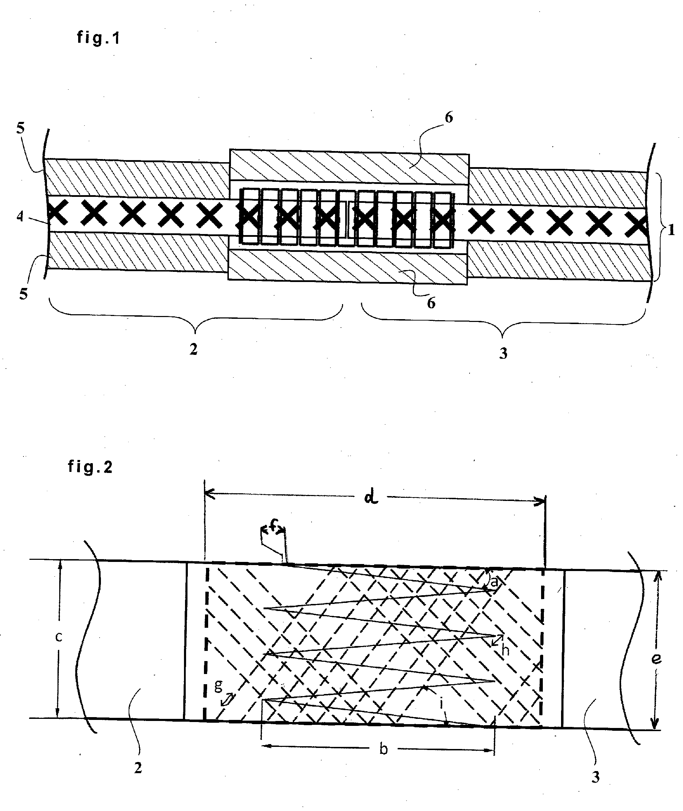

On peut voir sur les fig. 1 et 2, une bande 1 composée de deux bouts 2 et 3 assemblés. La bande 1 comporte une carcasse 4 et un revêtement 5, en caoutchouc. La carcasse apporte la résistance mécanique à la bande, alors que le revêtement 5 protège la carcasse et apporte une résistance aux agents extérieurs tels que l'humidité, le feu, la résistance chimique aux intempéries, aux produits transportés, la résistance aux impacts et/ou à l'abrasion. Ainsi, le revêtement apporte la durabilité.

La matière du revêtement peut être par exemple du PVC ou du caoutchouc.

La couture est protégée également par un morceau de revêtement 6 ajouté après la couture.

La forme des bouts 2 et 3 est une forme en dents.

La figure 2 représente les différents paramètres qui peuvent être pris en compte dans la jonction.
- a :: l'angle des dents par rapport à l'axe longitudinal de la bande.
- b :: la longueur des dents qui dépend du type de bande.
- c :: la largeur de la jonction qui est la même que celle de la bande à jonctionner.
- g :: la longueur de point de couture qui a une influence sur l'efficacité de couture.
- h :: la densité de couture exprimée en nombre de fils/cm.
- i :: l'angle de couture par rapport à l'axe longitudinal de la bande.

La couture est réalisée suivant des trajectoires déterminées et caractérisées par l'angle entre la trajectoire de couture et l'axe longitudinal de la bande.

Le champ de couture formé par un grand nombre de passages de couture, défini par la densité de couture, doit être plus long que les dents et aussi large que la bande à jonctionner.

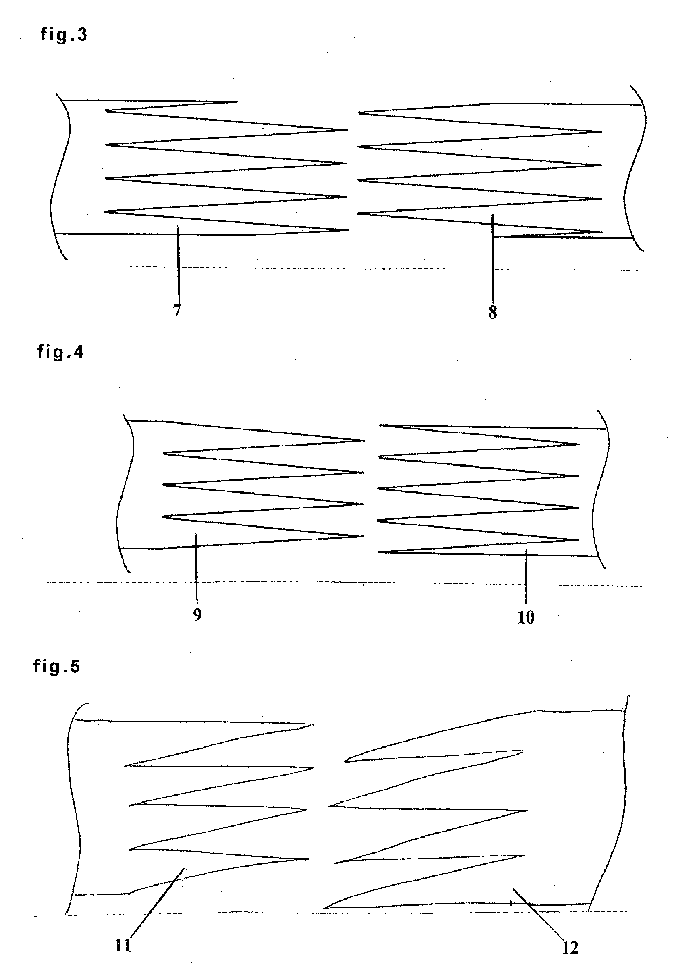

Les profils possibles de dents selon l'invention représentés sur les figures 3, 4 et 5 présentent des bouts 7 et 8 sont découpés suivant des profils asymétriques par rapport au plan médian de la bande.

Les bouts 9 et 10 sont découpés suivant des profils symétriques par rapport au plan médian de la bande.

Les bouts 11 et 12 sont découpés avec des angles non homogènes sur les deux côtés des dents.

La découpe des dents peut être réalisée avec un cutter, un cutter rotatif, une cisaille ou tout autre objet coupant, électrique ou non.

### Détails d'une jonction par couture sur une bande monopli :

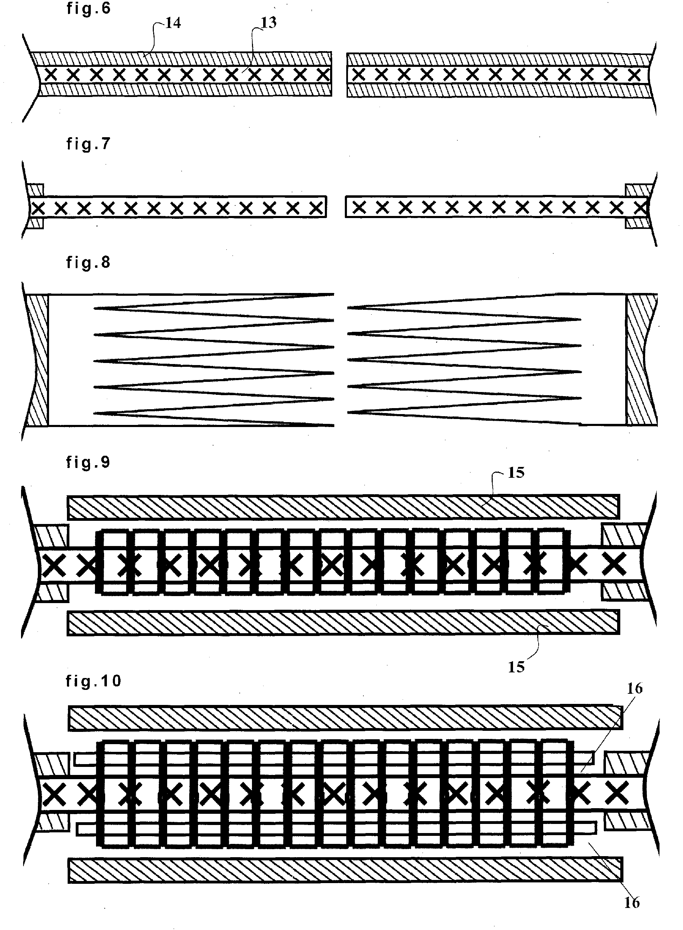

La figure 6 représente deux bouts à jonctionner d'une bande transporteuse monopli dont les repères 13 et 14 représentent respectivement la carcasse monopli et son revêtement en caoutchouc.

Selon un mode d'exécution des étapes du procédé suivant l'invention :
1. La première étape de jonctionnement représentée sur la figure 6 est de couper à angle droit les deux bouts à joindre.

Cette étape peut être réalisée à l'aide d'une lame tranchante par exemple ou tout autre outil coupant, électrique, pneumatique, jet d'eau....
2. La deuxième étape représentée sur la figure 7 consiste à enlever le revêtement. Cette étape peut être réalisée à l'aide d'un cutter en enlevant des bandes de revêtement ou en ponçant le revêtement avec un disque à poncer par exemple. La longueur de revêtement découverte doit être plus longue que la longueur des dents.
3. La troisième étape consiste à découper les dents suivant le profil choisi. Les différents profils représentés sur les figures 3 à 5 peuvent être utilisés sans que la liste des profils envisageables ne soit figée ; l'essentiel selon l'invention est d'avoir des diminutions de section lentes au niveau des dents pour assurer un transfert progressif de l'effort de traction d'un bout de bande à l'autre. La découpe peut être réalisée à l'aide d'un cutter ou tout autre objet coupant, électrique ou non.
4. La quatrième étape représentée sur la figure 9 et consiste à coudre les dents assemblées suivant des trajectoires définies représentées sur la figure 2.
   L'objectif est d'obtenir le champ de couture rempli d'une manière homogène afin de répartir les contraintes de traction.
   La couture peut être effectuée à l'aide de machine à coudre dite lourde, par exemple la 204 de la marque dite Durkopp-Adler. Ce type de machine est adaptée pour des épaisseurs allant jusqu'à 14 mm de matière.
5. La cinquième étape est de recouvrir la couture avec un morceau de revêtement 15. Cette étape peut être réalisée par collage ou vulcanisation par exemple. Cette étape va permettre de protéger les fils de couture notamment l'usure provoquée par la matière transportée par la bande transporteuse.
6. L'ajout d'un renfort, textile ou non, étape représentée sur la figure 10 permet d'améliorer le rendement de la jonction. Le renfort doit être posé avant de coudre le sandwich ainsi obtenu.

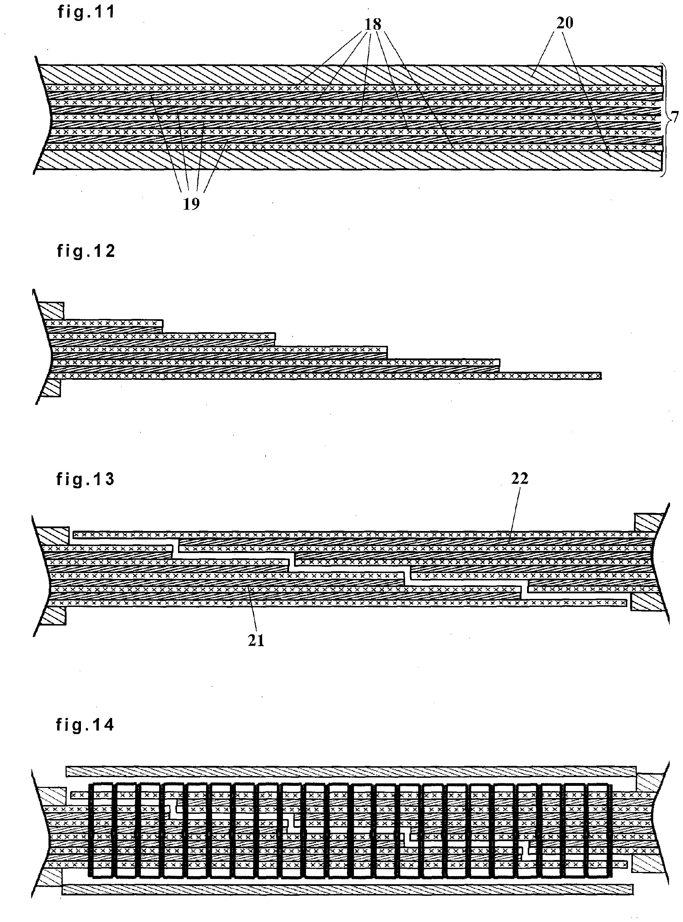

Détails d'une jonction par couture sur une bande multiplis, c'est-à-dire avec plusieurs couches de carcasses : Le morceau de bande transporteuse dite multiplis 17 représentée figure 11 comprend les plis de carcasses 18, les interplis 19 en matière caoutchouteuse par exemple et le revêtement 20 en caoutchouc par exemple.

Selon un mode d'exécution des étapes du procédé suivant l'invention :
1. La première étape consiste à couper à angle droit les deux bouts à jonctionner représentés figure 11. Cette étape peut être réalisée à l'aide d'une lame tranchante par exemple ou tout autre outil coupant, électrique, pneumatique, jet d'eau....
2. La deuxième étape consiste à enlever le revêtement représentés figure 12. Cette étape peut être réalisée à l'aide d'un cutter en enlevant des bandes de revêtement ou en ponçant le revêtement avec un disque à poncer par exemple. La longueur de revêtement découverte doit être plus longue que les étages.
3. La troisième étape est représentée sur la figure 12 et consiste à réaliser des étages dans les différents plis de la bande transporteuse. La longueur des plis dépend de la bande, mais dans un cas courant, une longueur de 100mm sera suffisante.
   Les différents étages vont pouvoir être effectués avec une ponceuse mécanique par exemple ou en découpant des bandes dans les différents plis de carcasse. Les étages des deux bouts à jonctionner devront être complémentaires, donc réalisés sur le dessus et le dessous respectivement sur le bout de gauche et de droite.
4. La quatrième étape représentée sur les figures 13 et 14 consiste à réaliser l'assemblage des deux bouts de bande 21 et 22 en superposant ces derniers avant de les coudre. La couture pourra être réalisée suivant des trajectoires définies présentées sur la figure 2. L'objectif est d'obtenir le champ de couture rempli d'une manière homogène afin de répartir les contraintes de traction.
5. La dernière étape consiste à recouvrir l'ensemble cousu afin de le protéger avec un morceau de revêtement 15. Cette étape peut être réalisée par collage ou vulcanisation par exemple. Cette étape va permettre de protéger les fils de couture notamment l'usure provoquée par la matière transportée par la bande transporteuse.

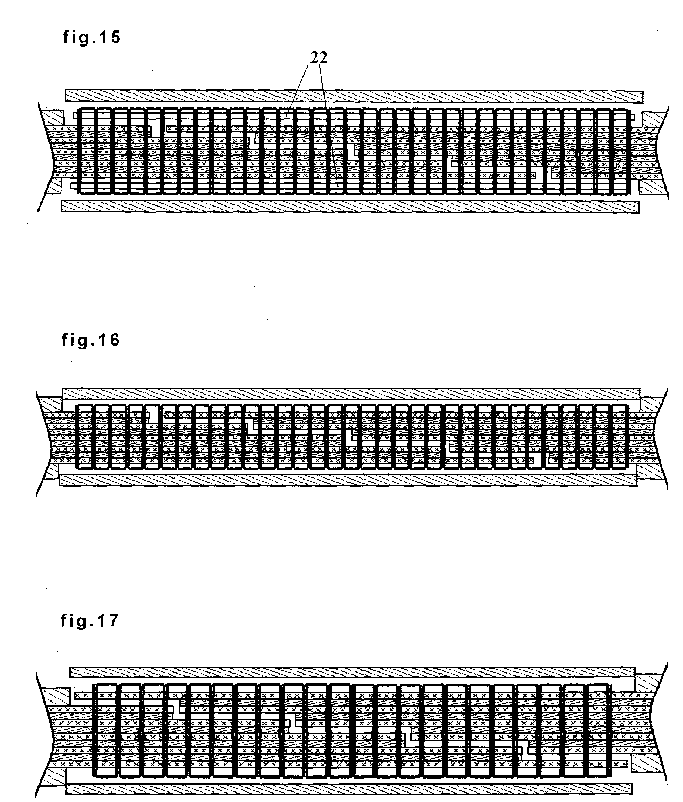

Il existe plusieurs manières de réaliser selon l'invention l'assemblage par couture d'une bande multiplis. Les figures 15, 16 et 17 représentent trois exemples d'assemblage étant respectivement :
- avec pli perdu et ajout d'un renfort 22 textile ou non,
- avec pli perdu sans ajout de renfort
- et sans pli perdu et sans ajout de renfort.

Ces différents assemblages n'auront pas la même épaisseur finale et la même efficacité.

Les combinaisons des différentes réalisations représentées sur les dessins ou décrites ci-dessus ne sortent pas du cadre de l'invention.

Les signes de références insérés après les caractéristiques techniques mentionnées dans les revendications ont pour seul but de faciliter la compréhension de ces dernières et n'en limitent aucunement la portée.

**Signes de référence**

| | |
|---|---|
| 1. bande | 14. revêtement en caoutchouc |
| 2. et 3. bouts | 15. revêtement |
| 4. carcasse | 16. plis, |
| 5. revêtement | 17. bande transporteuse dite multiplis, |
| 6. revêtement | 18 plis de carcasses, |
| 7 et 8. bouts | 19. interplis, |
| 9 et 10. bouts | 20 revêtement, |
| 11 et 12. bouts | 21 et 22. bouts de bande |
| 13. carcasse monopli | |

a. angle des dents par rapport à l'axe longitudinal de la bande (°)
b. longueur des dents (mm)
c. largeur de l'échantillon (mm)
d. longueur de la couture (mm)
e. largeur de la couture (mm)
f. taille de l'aiguille (centième de mm)
g. longueur du point de couture (mm)
h. densité de couture (fils/cm)
i. angle de la couture par rapport à la perpendiculaire à l'axe longitudinal de la bande (°)

## Revendications

1. Procédé d'assemblage de deux bouts (2, 3) de bande transporteuse (1) comportant au moins une carcasse (4), et un revêtement (5), par couture, le procédé comprenant les étapes suivantes :
- la première étape de ionctionnement étant de couper à angle droit les deux bouts (2,3) à joindre ;
- la deuxième étape consistant à enlever le revêtement;
- la troisième étape consistant à découper les dents suivant le profil choisi présentant des diminutions de section lentes au niveau des dents pour assurer un transfert progressif de l'effort de traction d'un bout de bande à l'autre ;
la longueur de revêtement découverte devant être plus longue que la longueur des dents;
- la quatrième étape consistant à coudre les dents assemblées suivant des trajectoires définies ; l'objectif étant d'obtenir le champ de couture rempli d'une manière homogène afin de répartir les contraintes de traction ;
- La cinquième étape étant de recouvrir la couture avec un morceau de revêtement (15).

2. Procédé selon la revendication 1, dans lequel la bande transporteuse (1) est composée par au moins la carcasse (4), d'un entreplis et le revêtement (5).

3. Procédé selon la revendication 1, dans lequel une étape supplémentaire de pose par coutures de renfort en tissé ou en non tissé est prévu entre les étapes de dépose des revêtements (5) et de couture pour assemblage des carcasses (4).

4. Procédé selon la revendication précédente, dans lequel lesdites dents présentent une longueur (b) allant de 10mm à 5000mm en fonction de l'épaisseur et de la largeur de la bande transporteuse à jonctionner, de préférence de l'ordre de 200mm.

5. Procédé selon la revendication précédente dans lequel lesdits étages présentent une longueur définie en fonction du nombre de plis, de la largeur et l'épaisseur de la bande, allant de 1mm à 5000mm, de préférence de l'ordre de 50mm.

6. Procédé selon l'une des revendications précédentes, dans lequel ladite couture présente une densité de couture (h) allant de 1 à 100 fils/cm en fonction de l'épaisseur, de la largeur et du type de la bande transporteuse à jonctionner de préférence de l'ordre de 15 à 20 fils/cm.

7. Procédé selon l'une des revendications précédentes, dans lequel la matière du fil est un polymère.

8. Procédé selon la revendication précédente, dans lequel la matière du fil est un polymère à cristaux liquides.

9. Procédé selon l'une des revendications précédentes, dans lequel l'angle complémentaire (i) de l'angle des fils de la couture par rapport à l'axe longitudinal de la bande est compris entre 0 et 90°, de préférence de l'ordre de 45°.

10. Procédé selon la revendication précédente, dans lequel deux sens de couture différents sont appliqués de sorte à croiser les fils correspondants, de préférence d'une manière sensiblement symétrique par rapport à l'axe longitudinal de la bande.

11. Procédé selon la revendication précédente, dans lequel la longueur du point de couture présente une longueur allant de 1 à 200mm, de préférence de 3 à 20mm.

12. Procédé selon l'une des revendications précédentes, dans lequel l'angle des dents (a) par rapport à l'axe longitudinal de la bande est compris entre 0° et 90°, de préférence défini en fonction de la largeur et de l'épaisseur de la bande transporteuse à jonctionner, de préférence de l'ordre de 7°.

13. Procédé selon l'une des revendications précédentes dans lequel l'assemblage mécanique des deux bouts est obtenu grâce au champ de couture pour éviter une couture « zig zag » ou suture.

14. Utilisation d'un procédé d'assemblage conforme à ceux décrit selon l'une des revendications précédentes pour obtenir un assemblage de deux bouts de bande transporteuse constituée d'une ou plusieurs carcasses, d'entreplis ou non et d'un revêtement.

15. Bande transporteuse (1) assemblée selon le procédé de la revendication 1, **caractérisée en ce qu'**elle est formée de bouts (2, 3) comprenant au moins une carcasse (4) et un revêtement (5), lesdits bouts étant assemblés par couture assemblant les dents selon un champ de couture rempli d'une manière homogène de densité (h) de 1 à 50 fils/cm, de préférence de l'ordre de 15 à 20 fils/cm, en découpe symétrique ou dissymétrique, de façon à obtenir des dents décalées.

## Patentansprüche

1. Verfahren zum Zusammenfügen von zwei Enden (2, 3) des Förderbandes (1) mit mindestens einem Körper (4) und einer Beschichtung (5) durch Nähen, wobei das Verfahren die folgenden Schritte umfasst:
- Der erste Schritt besteht darin, die beiden Enden (2, 3) zu schneiden, die rechtwinklig verbunden werden sollen.
- der zweite Schritt besteht darin, die Beschichtung zu entfernen;
- der dritte Schritt besteht darin, die Zähne gemäß dem ausgewählten Profil zu schneiden, wobei der Querschnitt an den Zähnen langsam abnimmt, um die allmähliche Übertragung der Zugkraft von einem Ende des Streifens auf das andere sicherzustellen;
- Die Beschichtungslänge muss länger sein als die Länge der Zähne.
- der vierte Schritt besteht darin, die zusammengebauten Zähne entlang definierter Wege zu nähen; Ziel ist es, ein homogen gefülltes Nähfeld zu erhalten, um die Zugspannungen zu verteilen;
- Der fünfte Schritt besteht darin, die Naht mit einem Stück Abdeckung (15) abzudecken.

2. Verfahren nach Anspruch 1, wobei das Förderband (1) mindestens aus dem Körper (4), einer Zwischenlage und der Beschichtung (5) besteht.

3. Verfahren nach Anspruch 1, wobei ein zusätzlicher Schritt des Verlegens durch Verstärken von Nähten in gewebtem oder nicht gewebtem Material zwischen den Schritten des Entfernens der Abdeckungen (5) und des Nähens zum Zusammenbauen der Körper (4) vorgesehen ist.

4. Verfahren nach dem vorhergehenden Anspruch, wobei die Zähne eine Länge (b) im Bereich von 10 mm bis 5000 mm aufweisen, abhängig von der Dicke und Breite des zu verbindenden Förderbandes, vorzugsweise in der Größenordnung von 200 mm.

5. Verfahren nach dem vorhergehenden Anspruch, wobei die Stufen eine Länge aufweisen, die gemäß der Anzahl der Falten, der Breite und der Dicke des Streifens definiert ist und im Bereich von 1 mm bis 5000 mm liegt, vorzugsweise in der Größenordnung von 50 mm.

6. Verfahren nach einem der vorhergehenden Ansprüche, wobei die Naht eine Nahtdichte (h) im Bereich von 1 bis 100 Fäden / cm aufweist, abhängig von der Dicke, Breite und Art des zu verbindenden Förderbandes. vorzugsweise in der Größenordnung von 15 bis 20 Fäden / cm.

7. Verfahren nach einem der vorhergehenden Ansprüche, bei dem das Material des Drahtes ein Polymer ist.

8. Verfahren nach dem vorhergehenden Anspruch, wobei das Material des Drahtes ein Flüssigkristallpolymer ist.

9. Verfahren nach einem der vorhergehenden Ansprüche, bei dem der komplementäre Winkel (i) des Winkels der Fäden der Naht in Bezug auf die Längsachse des Streifens zwischen 0 und 90 ° liegt, vorzugsweise von um 45 °.

10. Verfahren nach dem vorhergehenden Anspruch, wobei zwei verschiedene Nährichtungen angewendet werden, um den entsprechenden Sohn zu kreuzen, vorzugsweise in einer Weise, die im wesentlichen symmetrisch in Bezug auf die Längsachse des Streifens ist.

11. Verfahren nach dem vorhergehenden Anspruch, wobei die Länge des Stichs eine Länge im Bereich von 1 bis 200 mm, vorzugsweise von 3 bis 20 mm aufweist.

12. Verfahren nach einem der vorhergehenden Ansprüche, bei dem der Winkel der Zähne (a) relativ zur Längsachse des Streifens zwischen 0 ° und 90 ° liegt, vorzugsweise definiert als Funktion der Breite und die Dicke des zu verbindenden Förderbandes, vorzugsweise in der Größenordnung von 7 °.

13. Verfahren nach einem der vorhergehenden Ansprüche, bei dem die mechanische Anordnung der beiden Enden mittels des Nähfeldes erhalten wird, um ein "Zick-Zack" oder eine Naht zu vermeiden.

14. Verwendung eines Nähverfahrens gemäß den gemäß einem der vorhergehenden Ansprüche beschriebenen, um eine Anordnung von zwei Enden des Förderbandes zu erhalten, die aus einem oder mehreren Körpern zwischen Falten oder nicht und einer Beschichtung bestehen.

15. Förderband (1), zusammengebaut nach dem Verfahren nach Anspruch 1, **dadurch gekennzeichnet, dass** es aus Enden (2, 3) besteht, die mindestens einen Körper (4) und eine Beschichtung (5) umfassen, wobei die Enden sind Zusammenbau durch Nähen Zusammenbau der Zähne in einem homogen gefüllten Nahtfeld mit einer Dichte (h) von 1 bis 50 Fäden / cm, vorzugsweise in der Größenordnung von 15 bis 20 Fäden / cm, beim symmetrischen oder asymmetrischen Schneiden; um versetzte Zähne zu erhalten.

## Claims

1. Method for assembling two sections (2, 3) of conveyor belt (1) comprising at least a carcass (4) and a cover (5), by sewing, the method comprising the following steps:
- the first step in the splicing procedure being to cut the two ends (2, 3) to be spliced together at right angles,
- the second step consisting of removing the cover;
- the third step consisting of cutting the teeth according to the chosen profile with said teeth having gradually decreasing cross sections in order to provide a progressive transfer of the tensile stresses from one belt end to the other;
The length of the cover removed must be longer than the length of the teeth;
- the fourth step consisting of sewing the assembled teeth together following the paths defined; the aim being to obtain a sewn area that is filled uniformly in order to spread the tensile stresses;
- the fifth step being to cover the sewing with a piece of cover (15).

2. Method according to claim 1, wherein the conveyor belt (1) comprises at least the carcass (4), an interply and the cover (5).

3. Method according to claim 1, wherein an extra step consisting of sewing in woven or non-woven reinforcements is added between the steps of removing the covers (5) and sewing the carcasses (4) together.

4. Method according to the previous claim, wherein said teeth may vary in length (b) from 10 mm to 5000 mm depending on the thickness and width of the conveyor belt to be spliced, preferably being of the order of 200 mm.

5. Method according to the previous claim wherein staggered steps are of a length defined according to the number of plies, the width and the thickness of the belt, and may range from 1 mm to 5000 mm, preferably being of the order of 50 mm. '

6. Method according to one of the previous claims, wherein said sewing has a sewing density (h) that may vary from 1 to 100 threads/cm depending on the thickness, width and type of the conveyor belt to be spliced, preferably being of the order of 15 to 20 threads/cm.

7. Method according to one of the previous claims, wherein the thread material is a polymer.

8. Method according to the previous claim, wherein the thread material is a liquid crystal polymer.

9. Method according to one of the previous claims, wherein the complementary angle (i) of the angle of the threads in the sewing in relation to the longitudinal axis of the belt is between 0 and 90° inclusive, preferably being of the order of 45°.

10. Method according to the previous claim, wherein two different directions of sewing are applied so as to cross the corresponding threads, preferably substantially symmetrically in relation to the longitudinal axis of the belt.

11. Method according to the previous claim, wherein the length of the stitch may vary from 1 to 200 mm, preferably being between 3 and 20 mm.

12. Method according to one of the previous claims, wherein the angle of the teeth (a) in relation to longitudinal axis of the belt is between 0° and 90° inclusive, preferably being defined according to the width and thickness of the conveyor belt to be spliced, and preferably being of the order of 7°.

13. Method according to one of the previous claims wherein the mechanical assembly of the two belt sections is achieved thanks to the sewn area in order to avoid a "zigzag" or suture-type seam.

14. Use of a method of assembly consistent with those described in the previous claims to achieve the assembly of two sections of conveyor belt comprising one or more carcasses, with or without interplies, and a cover.

15. Conveyor belt (1) assembled according to the method in claim 1, **characterised in that** it is made up of sections (2, 3)
comprising at least a carcass (4) and a cover (5), said sections being assembled by sewing, assembling the teeth by means of a sewn area filled uniformly with a density (h) of 1 to 50 threads/cm, preferably being of the order of 15 to 20 threads/cm, the ends being cut symmetrically or dissymmetrically in such a way as to obtain offset teeth.
